(19) Europäisches Patentamt European Patent Office Office européen des brevets

(11) **EP 1 769 267 B1**

(12) **EUROPEAN PATENT SPECIFICATION**

(45) Date of publication and mention
of the grant of the patent:
**09.09.2009 Bulletin 2009/37**

(51) Int Cl.:
*G01V 1/00* *(2006.01)* *G08B 13/16* *(2006.01)*
*B60N 2/00* *(2006.01)*

(21) Application number: **05764579.8**

(22) Date of filing: **18.07.2005**

(86) International application number:
**PCT/BE2005/000117**

(87) International publication number:
**WO 2006/007673 (26.01.2006 Gazette 2006/04)**

(54) **MOVEMENT DETECTION SYSTEM AND METHOD**

SYSTEM UND VERFAHREN ZUR DETEKTION VON BEWEGUNGEN

SYSTEME ET PROCEDE DE DETECTION DE MOUVEMENT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **20.07.2004 US 589368 P**

(43) Date of publication of application:
**04.04.2007 Bulletin 2007/14**

(73) Proprietor: **Spruytte, Vincent
8000 Brugge (BE)**

(72) Inventor: **Spruytte, Vincent
8000 Brugge (BE)**

(74) Representative: **Plas, Axel Ivo Michel
BiiP cvba
Culliganlaan 1B
1831 Diegem (Brussels) (BE)**

(56) References cited:
**EP-A- 0 926 657 WO-A-00/13582
WO-A-00/79424 US-A1- 2003 109 993
US-B1- 6 370 481**

EP 1 769 267 B1

# Description

## Field of the invention

The present invention is related to a method and device for detecting movements from living sources within a vehicle.

## State of the art

A trailer or vehicle can be modelled in first order as a stiff lever on one or two fixed points, where these fixed points themselves are placed on a suspension system where the primary components are a one-dimensional spring constant and the damping constant.

The suspension system of a trailer normally produces vibrations at frequencies between 6 Hz and 9 Hz. The measured frequency on the lever will be between 4 Hz and about 7 Hz. More details can be found in patent document WO 92/10735, wherein a method for determining the dynamic properties of a vibration isolation pad is disclosed.

A person concealed in a trailer or any external source will mostly induce impacts on this system. Reference is also made to the introductory section of patent US-6370481-B1. This means that the system starts to vibrate on its natural frequency of about 4 Hz to about 7 Hz. Due to the damping in the system this frequency will be measured as a frequency with a width. The signal will be very weak. To make it measurable, a geophone (i.e. a small instrument for measuring ground motion) with natural frequency of 4.5 Hz is used. As this probe has almost the same natural frequency as the trailer system, it amplifies the signals on its resonance frequency.

Document US-6370481-B discloses an apparatus and method for human presence detection in vehicles. The main drawback of this method is that it only works in relatively calm situations. This system also needs the total mass of the vehicle entered in the system, which is not very practical. As a further drawback the detecting process is stopped or interrupted each time a disturbing signal (ground seismic signal, wind, ...) is found to exceed a certain threshold level.

Many other systems for detecting human bodies have been disclosed. JP2003006758 discloses a human body detector based on a sequence of images. In EP1420270 the decision on the presence or absence of a human in the vehicle is taken based upon the envelope of a synthetic wave representing the transmitted wave radiated from a sensor and a reflected wave returned from a breathing human body. In JP2003287576 a human body is detected from a detection signal detected from the standing wave caused by the interference between a transmission wave and a reception wave. In other approaches the use of e.g. wavelet transforms has been considered.

## Aims of the invention

The present invention aims to provide a method and device to detect movements from living object or other moving sources within a trailer or another vehicle in the presence of external signals as ground vibrations, sounds, wind, ... without opening the vehicle.

## Summary of the invention

The present invention relates to a method for for detecting movements within a vehicle, comprising the steps of

- sensing vibrations inside the vehicle by means of a first set of sensors and generating a first set of signals representative of the vibrations sensed inside the vehicle,
- sensing simultaneously vibrations from external disturbances by means of a second set of sensors and generating a second set of signals representative of the vibrations sensed from external disturbances,
- determining a set of correlation coefficients between signals from first set of signals and signals from the second set of signals,
- performing a statistical analysis of the set of correlation coefficients, and
- deciding on movement based on the statistical analysis.

In a preferred embodiment one sensor is provided for each external disturbance to be sensed.

Advantageously the method further comprises the step of performing an A/D conversion on the first set and the second set of signals and a digital filtering operation before performing the step of determining the set of correlation coefficients.

Preferably the root mean square values of signals from the first and second set of signals are used for determining the correlation indices.

In a second object the invention relates to a system for detecting movements within a vehicle, comprising

- a first set of sensors for sensing vibrations inside the vehicle, generating a first set of signals,
- a second set of sensors for simultaneously sensing external disturbances, generating a second set of signals and
- a processing unit comprising calculation means for calculating a set of correlation coefficients between signals from the first set of signals and the second set of signals and a statistical analysis unit for analysing the set of correlation coefficients and taking a decision on movement.

In a preferred embodiment the first set of sensors is positioned on said vehicle's chassis. In an advantageous embodiment the first set of sensors comprises four sensors.

Preferably the processing unit further comprises an A/D converter and digital filtering means.

Advantageously the second set of sensors comprises at least one low frequency microphone. The external disturbances typically belong to the group of disturbances comprising wind, sound, ground seismic vibrations, electromagnetic vibrations.

## Short description of the drawings

Fig. 1 represents the positioning of sensors on the vehicle.

Fig. 2 represents the dynamics of a system with a natural frequency of 4.5 Hz and a damping factor of 5 %.

Fig. 3 represents a scheme of the central processing unit.

## Detailed description of the invention

In order to take into account the influence of external sources the present invention proposes to decide on the presence or absence of a living source within the vehicle based on the statistical correlation between a signal derived from the vehicle and a signal derived from the sensed vibrations from external sources.

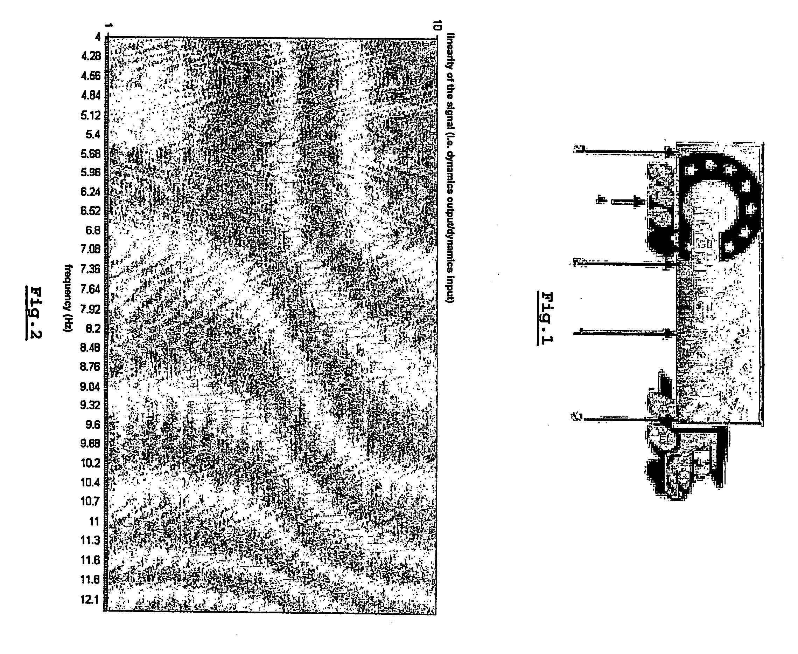

In a first step the vehicle vibrations are to be measured. The system comprises a first set of sensors to be positioned on the chassis of the vehicle. The number of sensors used depends on the dimensions of the vehicle to be inspected. Preferably they are positioned more or less evenly divided over the vehicle's length. An example is shown in Fig.1. On the contrary, a wrong position to place a sensor would e.g. be on a fixed point just above the suspension system, as it then would not be able to properly detect any vibration. The type of sensors used should be such that their eigenfrequencies correspond to (i.e. are in the same range as) the eigenfrequencies as determined with the cantilever method as described in WO 92/10735.

The signal measured by a sensor is strongly non-linear due to the resonance phenomena. Therefore a signal between 6.5 and 9 Hz is used, which gives a much more linear characteristic (see Fig.2). This measurable signal contains the information about the presence of vibration source (moving sources) in the trailer or other vehicle. The system acts a damped mass on a spring system. The amplitude of the displacement Z of the mass on the spring as a function of the displacement X of a moving object on the mass (or in function of the force on the mass) is given by

$$Z = \frac{X r^2}{\sqrt{(1 - r^2)^2 + (2\xi r)^2}}$$

where r is given by $r = \omega/\omega_n$ (i.e. the ratio of the frequency to the natural frequency) and $\xi$ denotes the damping factor. With two excitations $X_1$ and $X_2$, one obtains two responses $Z_1$ and $Z_2$. The signal dynamics are given by the difference of both signals. The relative dynamics are given by the expression

$$\frac{Z_2 - Z_1}{X_2 - X_1}$$

In Fig.2 this dynamic is given as an example for a natural frequency of the system of 4.5 Hz and a damping $\xi$ of 5%. It is clear that the farther away form the resonance frequency, the more linear the dynamics of the response are. On the other hand, the amplitude becomes smaller. A choice of a measurement range between 1.5 and 2 times the resonance frequency gives a good compromise between a fair amplitude and a relatively linear response.

The vehicle signals are measured on a numbers of points (e.g. 4) on the chassis of the trailer and checked with a threshold level. Simultaneously the external sources (wind, vibration, sound, ...) must be measured.

The system therefore further comprises a second set of sensors for measuring the disturbances in the neighbourhood of the vehicle caused by external sources. The sensors are capable of operating in the same frequency range as the sensors from said first set. The number of sensors depends on the number of external disturbances to be measured. For each disturbance a separate sensor must be provided. Ground seismic signals can be measured with the same kind of sensor as those for measuring the vehicle vibrations. Wind and sound can be measured each with a low frequency microphone. Preferably a sensor for measuring a disturbance is placed on a position where the signal is correlated with the measured signal, caused by said disturbance.

External vibration sources like ground are inducing unwanted signals on the vehicle or vehicle sensors. When no internal vibration source is present within the vehicle, the unwanted signal and the signal on the vehicle have to be correlated. If the correlation between signals caused by the external source and signals on the vehicle is low, a source other than the external one(s) is causing the vibrations on the vehicle, presumably an internal source.

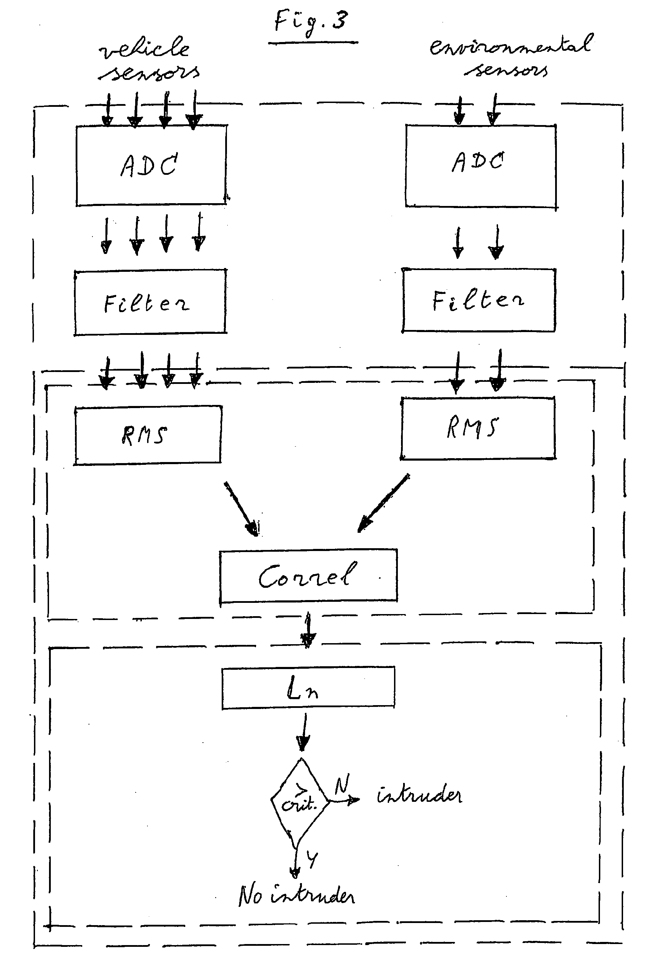

The signals received from the sensors by the central processing unit are first applied to an A/D converter and subsequently to a digital filter (see Fig.3). The filter has a passband adapted to the eigenfrequencies of the sensors as previously explained. The filtered digital signals are then fed to a calculation unit (Fig.3). The Root Mean Square (RMS) values of the received signals are determined. The correlation is used on the discrete RMS signals and calculated following the well known formula

$$Correl(X,Y) = \frac{\sum(x-\overline{x})(y-\overline{y})}{\sqrt{\sum(x-\overline{x})^2 \sum(y-\overline{y})^2}}$$

where $\overline{x}$ and $\overline{y}$ denote the sample means of the arrays X and Y, respectively. For example, the array X represents a signal from one of the vehicle sensors and Y is an array representing a ground seismic signal. It is well known that the above formula yields a correlation value between -1 and 1. A strong positive correlation is an indication of an in phase correlation, whereas a strong negative value indicates a correlation in counterphase.

The correlation indices between the vehicle, signals and the external signals are evaluated independently with statistical levels $L_N{}^S$. These levels $L_N{}^S$ are defined as the level that signal S exceeds N% of the time, S e.g. being a signal indicative of a correlation coefficient as function of time. The calculation of the statistical levels is based on a cumulative distribution. This method also removes the influence of exceptional low and exceptional high values.

Next an evaluation of the results is performed. Advantageously two values A and B (one positive value and one negative value) are predefined to delimit within the range [-1,1] the decision range within which a correlation value must fall for two variables to be considered as correlated or not correlated. Each calculated correlation coefficient is classified with respect to said predefined values. Next a decision is taken based upon the results of the analysis. When a predefined number of criteria are met (i.e. correlation coefficients exceeding a threshold value), it is decided no internal vibration source is present. For example, when the correlation coefficients between three of the vehicle signals and the ground seismic signal all exceed the threshold value, a decision is taken that no living source is present within the vehicle.

The central processing unit further also comprises a counter to count the number of measurement results before the statistical analysis starts and a statistical engine to calculate the different statistical levels.

The method of the invention allows a good prediction of the two types of faults (no internal vibrations while there are internal sources and internal vibrations while there are no internal sources) where the distribution of both types of events and situations overlaps.

## Claims

1. Method for detecting movements within a vehicle, comprising the steps of

   - sensing vibrations inside said vehicle by means of a first set of sensors and generating a first set of signals representative of said vibrations sensed inside said vehicle,
   - sensing simultaneously vibrations from external disturbances by means of a second set of sensors and generating a second set of signals representative of said vibrations sensed from external disturbances,
   - determining discrete root-mean-square (RMS) values from said first and second set of signals,
   - determining from said discrete RMS values a set of correlation coefficients between said discrete RMS values,
   - performing a statistical analysis of said set of correlation coefficients, and
   - deciding on movement based on said statistical analysis.

2. Method for detecting movements as in claim 1, wherein one sensor is provided for each external disturbance to be sensed.

3. Method for detecting movements as in claim 1 or 2, further comprising the step of performing an A/D conversion on said first set and said second set of signals and a digital filtering operation before performing the step of determining said set of correlation coefficients.

4. System for detecting movements within a vehicle, comprising

   - a first set of sensors for sensing vibrations inside said vehicle, generating a first set of signals,
   - a second set of sensors for simultaneously sensing external disturbances, generating a second set of signals and
   - a processing unit comprising calculation means for calculating discrete RMS values from said first set of signals and said second set of signals and for deriving a set of correlation coefficients between said discrete RMS values and a statistical analysis unit for analysing said set of correlation coefficients and taking a decision on movement.

5. System for detecting movements as in claim 4, wherein said first set of sensors is positioned on said vehicle's chassis.

6. System for detecting movements as in claim 4 or 5, wherein said first set of sensors comprises four sensors.

7. System for detecting movements as in claim 4, 5 or 6, wherein said processing unit further comprises an A/D converter and digital filtering means.

8. System for detecting movements as in any of claims 4 to 7, wherein second set of sensors comprises at least one low frequency microphone.

**9.** System for detecting movements as in any of claims 4 to 8, wherein said external disturbances belong to the group of {wind, sound, ground seismic vibrations, electromagnetic vibrations}.

**Patentansprüche**

**1.** Verfahren zum Erfassen von Bewegungen innerhalb eines Fahrzeugs, umfassend folgende Schritte:

- Abtasten von Vibrationen im Innern des Fahrzeugs mittels einer ersten Gruppe von Sensoren und Erzeugen einer ersten Gruppe von Signalen, welche die im Innern des Fahrzeugs abgetasteten Vibrationen darstellen,
- gleichzeitiges Abtasten von Vibrationen von externen Störungen mittels einer zweiten Gruppe von Sensoren und Erzeugen einer zweiten Gruppe von Signalen, welche die von den externen Störungen abgetasteten Vibrationen darstellen,
- Bestimmen diskreter quadratischer Mittelwerte (RMS) aus der ersten und zweiten Gruppe von Signalen,
- Bestimmen aus den diskreten RMS-Werten einer Gruppe von Korrelationskoeffizienten zwischen den diskreten RMS-Werten,
- Ausführen einer statistischen Analyse der Gruppe von Korrelationskoeffizienten, und
- Entscheiden über die Bewegung basierend auf der statistischen Analyse.

**2.** Verfahren zum Erfassen von Bewegungen nach Anspruch 1, wobei ein Sensor für jede abzutastende externe Störung bereitgestellt wird.

**3.** Verfahren zum Erfassen von Bewegungen nach Anspruch 1 oder 2, ferner umfassend den Schritt des Ausführens einer A/D-Umwandlung an der ersten Gruppe und der zweiten Gruppe von Signalen und eines digitalen Filtervorgangs vor dem Ausführen des Schrittes des Bestimmens der Gruppe von Korrelationskoeffizienten.

**4.** System zum Erfassen von Bewegungen innerhalb eines Fahrzeugs, umfassend:

- eine erste Gruppe von Sensoren zum Abtasten von Vibrationen im Innern des Fahrzeugs, wobei eine erste Gruppe von Signalen erzeugt wird,
- eine zweite Gruppe von Sensoren zum gleichzeitigen Abtasten von externen Störungen, wobei eine zweite Gruppe von Signalen erzeugt wird, und
- eine Verarbeitungseinheit, umfassend Rechenmittel zum Berechnen diskreter RMS-Werte aus der ersten Gruppe von Signalen und der zweiten Gruppe von Signalen und zum Ableiten einer Gruppe von Korrelationskoeffizienten zwischen den diskreten RMS-Werten, und eine statistische Analyseeinheit zum Analysieren der Gruppe von Korrelationskoeffizienten und zum Treffen einer Entscheidung bezüglich der Bewegung.

**5.** System zur Bewegungserfassung nach Anspruch 4, wobei die erste Gruppe von Sensoren auf dem Fahrgestell des Fahrzeugs angeordnet ist.

**6.** System zur Bewegungserfassung nach Anspruch 4 oder 5, wobei die erste Gruppe von Sensoren vier Sensoren umfasst.

**7.** System zur Bewegungserfassung nach Anspruch 4, 5 oder 6, wobei die Verarbeitungseinheit ferner einen A/D-Wandler und digitale Filtermittel umfasst.

**8.** System zur Bewegungserfassung nach einem der Ansprüche 4 bis 7, wobei die zweite Gruppe von Sensoren mindestens ein Niederfrequenzmikrofon umfasst.

**9.** System zur Bewegungserfassung nach einem der Ansprüche 4 bis 8, wobei die externen Störungen zu der Gruppe von {Wind, Schall, seismische Vibrationen, elektromagnetische Vibrationen} gehören.

**Revendications**

**1.** Procédé de détection de mouvement dans un véhicule, comprenant les étapes consistant à :

- détecter des vibrations à l'intérieur dudit véhicule au moyen d'un premier ensemble de capteurs et générer un premier ensemble de signaux représentatifs desdites vibrations détectées à l'intérieur dudit véhicule,
- détecter simultanément des vibrations à partir de perturbations externes au moyen d'un deuxième ensemble de capteurs et générer un deuxième ensemble de signaux représentatifs desdites vibrations détectées à partir de perturbations externes,
- déterminer des valeurs discrètes de moyenne quadratique (RMS) à partir desdits premier et deuxième ensembles de signaux,
- déterminer à partir desdites valeurs discrètes RMS un ensemble de coefficients de corrélation entre lesdites valeurs discrètes RMS,
- effectuer une analyse statistique dudit ensemble de coefficients de corrélation, et
- prendre une décision relative au mouvement sur la base de ladite analyse statistique.

**2.** Procédé de détection de mouvement selon la revendication 1, dans lequel un capteur est fourni pour chaque perturbation externe à détecter.

**3.** Procédé de détection de mouvement selon la revendication 1 ou 2, comprenant en outre l'étape consistant à effectuer une conversion analogique-numérique sur ledit premier ensemble de signaux et sur ledit deuxième ensemble de signaux et une opération de filtrage numérique avant d'effectuer l'étape de détermination dudit ensemble de coefficients de corrélation.

**4.** Système de détection de mouvement dans un véhicule, comprenant :

- un premier ensemble de capteurs pour détecter des vibrations à l'intérieur dudit véhicule en générant un premier ensemble de signaux,
- un deuxième ensemble de capteurs pour détecter simultanément des perturbations externes en générant un deuxième ensemble de signaux, et
- une unité de traitement comprenant des moyens de calcul pour calculer des valeurs discrètes RMS à partir dudit premier ensemble de signaux et dudit deuxième ensemble de signaux et pour dériver un ensemble de coefficients de corrélation entre lesdites valeurs discrètes RMS et une unité d'analyse statistique pour analyser ledit ensemble de coefficients de corrélation et prendre une décision relative au mouvement.

**5.** Système de détection de mouvement selon la revendication 4, dans lequel ledit premier ensemble de capteurs est positionné sur le châssis dudit véhicule.

**6.** Système de détection de mouvement selon la revendication 4 ou 5, dans lequel ledit premier ensemble de capteurs comprend quatre capteurs.

**7.** Système de détection de mouvement selon la revendication 4, 5 ou 6, dans lequel ladite unité de traitement comprend en outre un convertisseur analogique-numérique et des moyens de filtrage numérique.

**8.** Système de détection de mouvement selon l'une quelconque des revendications 4 à 7, dans lequel le deuxième ensemble de capteurs comprend au moins un microphone de basse fréquence.

**9.** Système de détection de mouvement selon l'une quelconque des revendications 4 à 8, dans lequel lesdites perturbations externes appartiennent au groupe se composant du vent, des sons, des vibrations sismiques terrestres et des vibrations électromagnétiques.

**Fig.1**

linearity of the signal (i.e. dynamics output/dynamics input)

frequency (Hz)

**Fig.2**

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9210735 A
- US 6370481 B1
- US 6370481 B
- JP 2003006758 B
- EP 1420270 A
- JP 2003287576 A